# EUROPÄISCHE PATENTSCHRIFT

(11) **EP 1 113 245 B1**
(45) Veröffentlichungstag und Bekanntmachung des Hinweises auf die Patenterteilung: **27.02.2008**
(21) Anmeldenummer: 00126141.1
(22) Anmeldetag: 30.11.2000
(51) Int. Cl.: G01C 21/20, G01C 21/36, G08G 1/0969

(54) **Navigationsgerät**
Navigation device
Dispositif de navigation

(30) Priorität: 29.12.1999 DE 19963567
(43) Veröffentlichungstag der Anmeldung: 04.07.2001
(73) Patentinhaber: ROBERT BOSCH GMBH, 70442 Stuttgart (DE)
(72) Erfinder: Wawra, Martin, 40470 Düsseldorf (DE)

(56) Entgegenhaltungen:
- EP-A- 0 772 173
- EP-A- 0 802 516
- EP-A- 0 897 170
- EP-A- 1 024 467
- US-A- 5 835 881

## Beschreibung

### Stand der Technik

Die Erfindung geht aus von einem Navigationsgerät nach der Gattung des unabhängigen Patentanspruchs.

Es sind bereits tragbare Navigationsgeräte mit einem GPS-(Global Positioning System) Satellitenempfänger bekannt, wobei die aktuelle Position in Koordinaten angezeigt wird. Zusätzlich wird noch zu dem einprogrammierten Ziel eine Bewegungsrichtung angezeigt. Es ist unterwegs möglich, eine automatische Modifikation der Route vorzunehmen. Die Darstellung erfolgt zweidimensional, wobei eine ein- oder mehrfarbige Anzeige verwendet wird. Die vorhandenen tragbaren Navigationsgeräte sind dadurch gekennzeichnet, daß es geschlossene Systeme sind, die proprietäre Schnittstellen aufweisen.

Aus EP 0 802 516 A2 ist ein Navigationsgerät bekannt, bei dem die Darstellung perspektivisch erfolgt. Bei Gebäuden kann als Zusatzinformation eine Bezeichnung der Gebäude angegeben werden. Aus EP 0 897 170 A2 ist ein Navigationsgerät bekannt, bei dem über eine Gelbe-Seitenfunktion durch Eingabe einer Rufnummer eine Person im Gebäude lokalisiert werden kann. Das Stockwerk, indem sich die Person befindet, wird hervorgehoben. Aus der älteren Patentanmeldung EP 10 24 467 A2 ist eine perspektivische Darstellung bei einem Navigationsgerät bekannt. Mit diesem Navigationsgerät ist es möglich, beispielsweise eine Toilette in der Umgebung des Fahrzeugs, indem sich das Navigationsgerät befindet, zu finden.

Aus US-5 289 572 ist bekannt auf einer Karte ein Hotel auszuwählen, wobei durch Aktivierung eines Bedienelements eine Rufnummer dargestellt werden kann, die dann über ein Telefon gewählt werden kann, um eine Verbindung herzustellen.

### Vorteile der Erfindung

Das erfindungsgemäße Navigationsgerät mit den Merkmalen des unabhängigen Patentanspruchs hat demgegenüber den Vorteil, daß mittels der objektorientierten Darstellung eine realitätsnahe Anzeige einer darzustellenden Szene möglich ist. Dadurch wird ein höherer Wiedererkennungswert der Szene

erreicht, die insbesondere in schwierigen Situationen von Nutzen sein kann. Zu solchen schwierigen Situationen gehören z.B. Wetterlagen, die sichtbehindernd sind, oder eine Bewegung bei Nacht.

Weiterhin ist es von Vorteil, daß die darzustellende Szene aus beliebigen Objekten kombiniert wird, wobei nun auch künstliche Objekte in die darzustellende Szene eingefügt werden können, die in der Wirklichkeit nicht vorhanden sind. Damit ergibt sich die Möglichkeit, Objekte, die Werbung vermitteln, in eine darzustellende Szene einzufügen.

Darüber hinaus ist es von Vorteil, daß ein Benutzer mittels Interaktivität zusätzliche für ihn interessante Daten abrufen kann. Damit ist ein Informationsfilter realisiert, da nun der Benutzer wählt, zu welchen Objekten er Zusatzfunktionen haben möchte.

Durch die in den abhängigen Ansprüchen aufgeführten Maßnahmen und Weiterbildungen sind vorteilhafte Verbesserungen des im unabhängigen Patentanspruch angegebenen Navigationsgeräts möglich.

Erfindungsgemäss werden mittels der Zusatzfunktionen zusätzliche Informationen und Kommunikationsmittel angesprochen, so daß sich ein Benutzer entweder weitere Informationen zu einem bestimmten Objekt beschafft oder über Kommunikationsmittel solche Informationen abruft oder über diese Informationsmittel Nachrichten versendet, um zum Beispiel Buchungs- oder Kaufaufträge abzugeben. Damit sind allgemein verwendete, offene Schnittstellen nach außen durch die Kommunikationsmittel implementiert. Dies macht die Kommunikation unabhängig von Vorgaben eines Herstellers des Navigationsgeräts.

Weiterhin werden erfindungsgemäss über solche Kommunikationsmittel externe Datenquellen angesprochen, um weitere Daten abzurufen. Dadurch ist es einerseits möglich, zusätzliche Daten zu laden, oder auch externe Datenquellen dafür zu verwenden, um einen Großteil der für die Darstellung der aktuellen Szene notwendigen Daten zu laden. Damit wird vorteilhafterweise das Datenprofil des Navigationsgerätes selbst schlank und mächtigere externe Datenquellen werden verwendet.

In einer vorteilhaften Weiterbildung der Erfindung ist es vorgesehen, daß der Benutzer mittels der Eingabevorrichtung wählt, welchen Skalierungsfaktor er für die darzustellende Szene haben möchte. Dies hängt insbesondere von der Detailtreue der darzustellenden Szene, die der Benutzer wünscht, ab. Dafür werden vorteilhafterweise die Objekte skaliert.

Des weiteren ist es von Vorteil, daß verschiedene Darstellungsmöglichkeiten Pfeildarstellung, zweidimensional oder perspektivisch, je nach Benutzerwahl und der Situation, eingestellt werden. Dies erhöht stark die Flexibilität des Navigationsgeräts.

Weiterhin ist es von Vorteil, daß das Navigationsgerät es erlaubt, eine Route zu einem vorgegebenen Ziel zu simulieren. Damit wird es für einen Benutzer möglich, einen Schwierigkeitsgrad oder die Attraktivität einer Route abzuschätzen.

Darüber hinaus ist es von Vorteil, daß die Anzeige des Navigationsgerätes es erlaubt, gleichzeitig mehrere Szenen darzustellen. Damit ist es vorteilhafterweise möglich, neben der aktuellen Szene auch weitere Szenen, z.B. eine Simulation, ablaufen zu lassen. Dies erhöht stark die Flexibilität und Attraktivität des erfindungsgemäßen Navigationsgeräts.

In einer Weiterbildung der Erfindung ist vorgesehen, daß die Darstellung in Abhängigkeit von der Geschwindigkeit des Navigationsgeräts verändert wird. Für hohe Geschwindigkeiten wird daher eine vereinfachte Darstellung gewählt um einem Benutzer nur die allernotwendigsten Informationen zuzuführen, während bei einer geringen Geschwindigkeit des Navigationsgeräts die volle Komplexität einer darzustellenden Szene verwendet wird.

Darüber hinaus ist von Vorteil, daß die Objekte mit dem MPEG4-Standard codiert sind. Damit wird es möglich, daß eine Kommunikation mit verschiedensten Anbietern, die diesen international anerkannten, weit verbreiteten Standard verwenden, möglich ist.

Weiterhin ist es von Vorteil, daß die Anzeige eine berührungssensitive Schicht aufweist, so daß eine einfache Bedienung des Navigationsgeräts über die Anzeige selbst möglich ist.

Darüber hinaus werden dann die umfangreichen Methoden der Darstellung, die mittels der objektorientierten Darstellung möglich sind, ausgenutzt, um Bedienelemente optisch darzustellen, so daß der Benutzer durch Berührung der berührungssensitiven Schicht diese Bedienelemente aktiviert.

Darüber hinaus ist es von Vorteil, daß die Eingabevorrichtung mausähnliche Bedienelemente aufweist, die es erlauben, einen Zeiger oder ein äquivalentes Element, zum Beispiel ein symbolhafter Quader, in der Anzeige zu bewegen und zu aktivieren. Auch ein Rollen der Darstellung, das im Englischen mit Scrolling bezeichnet wird, ist mit diesem Bedienelement möglich. Diese Methode ist von den Computern her vielen Personen gut bekannt und erlaubt eine flexible Programmierung der Szene. In einer Weiterbildung der Erfindung ist vorgesehen, daß das erfindungsgemäße Navigationsgerät Mittel aufweist, um Speichermedien aufzunehmen. Damit kann ein Benutzer in Abhängigkeit zum Beispiel von dem Standort, an dem er sich befindet, entsprechende Speichermedien mit für diesen Standort relevanten Daten in das Navigationsgerät eingeben, um diese Daten nutzen zu können. Dies erhöht die Flexibilität des erfindungsgemäßen Navigationsgeräts.

Des weiteren ist es von Vorteil, daß das Navigationsgerät Mittel zur Aufzeichnung von akustischen und/oder optischen Daten aufweist, was eine attraktive Zusatzfunktion des erfindungsgemäßen Navigationsgeräts ist, womit sich der Nutzen für verschiedenste Gruppen von Benutzern steigert.

Weiterhin ist es vorgesehen, daß aus den Standorten, an denen das Navigationgerät war, eine Geschwindigkeitsberechnung möglich ist, um damit auch eine Bewegungsrichtung abzuschätzen. Dies ist von Vorteil für die Darstellung einer aktuellen Szene, da dann das Navigationsgerät erkennt, in welcher Richtung und damit welche Szene für einen Nutzer von Nutzen ist.

Darüber hinaus ist es von Vorteil, daß das erfindungsgemäße Navigationsgerät so ausgebildet ist, daß es akustische Anweisungen bezüglich der Route zu seinem gewählten Ziel gibt. Dies ist für einen Benutzer besonders einfach, insbesondere in schwierigen Situation, wo er nicht immer auf die Anzeige des Navigationsgeräts blicken kann.

Schließlich ist es von Vorteil, daß die Elemente des Navigationsgeräts über einen Bus kommunizieren, wodurch der Aufbau besonders einfach und übersichtlich wird.

### Zeichnung

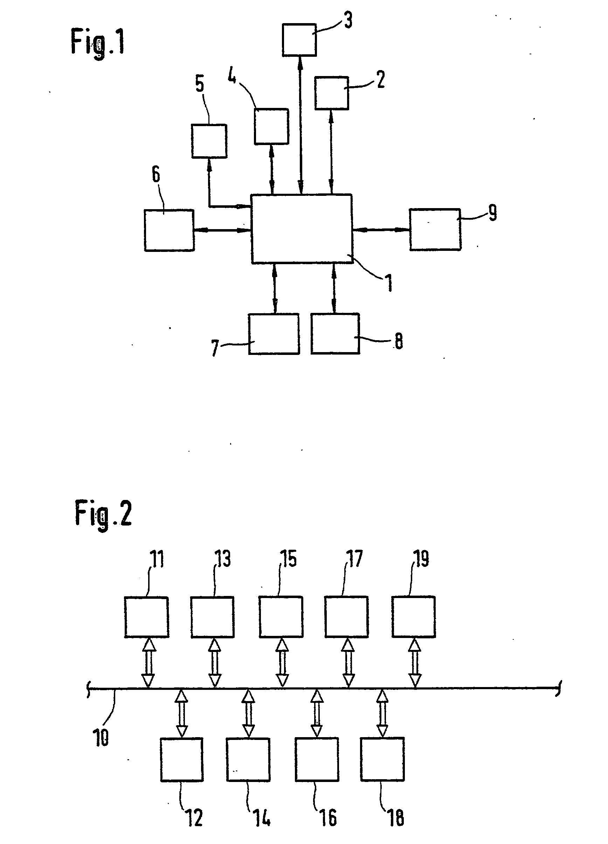

Ausführungsbeispiele der Erfindung sind in der Zeichnung dargestellt und werden in der Beschreibung näher erläutert. Es zeigen Figur 1 ein erfindungsgemäßes Navigationsgerät und Figur 2 ein erfindungsgemäßes Navigationsgerät, das einen Bus aufweist.

### Beschreibung

Navigationsgeräte dienen zur grafisch und akustisch unterstützen Routenführung, wobei eine möglichst genaue Darstellung der Wirklichkeit auf einem Monitor des Navigationsgeräts für einen Benutzer, der sich in einem Gelände bewegt, hilfreich ist. Das erleichtert die Wiedererkennung einer tatsächlichen Szene. Akustische Hinweise des Navigationsgeräts führen zu einer verbesserten Leitung des Benutzers zu seinem Ziel.

In Figur 1 ist das erfindungsgemäße tragbare Navigationsgerät dargestellt. Ein Prozessor 1 ist über seinen ersten Datenein/-ausgang mit einer Ortungsvorrichtung 2 über seinen zweiten Datenein/-ausgang mit einer Anzeige 3, über seinen dritten Datenein/-ausgang mit einer Eingabevorrichtung 4, über seinen vierten Datenein/-ausgang mit einem Lautsprecher 5 mit angeschlossener Elektronik, über seinen fünften Datenein/-ausgang mit Kommunikationsmitteln 6 über seinen sechsten Datenein/-ausgang mit einer Aufnahme 7 für Speichermedien mit Signalverarbeitung, über seinen siebten Datenein/-ausgang mit einem Recorder 8 und über seinen achten Datenein/-ausgang mit einem Speicher 9 verbunden. Die miteinander verbundenen Komponenten des tragbaren Navigationsgeräts weisen Schnittstellen auf, die eine zweiseitige Datenübertragung zwischen den Komponenten ermöglichen.

Die Ortungsvorrichtung 2 weist einen GPS (Global Positioning System)-Satellitenempfänger auf mittels dessen Koordinaten eines aktuellen Standort des tragbaren Navigationsgeräts berechnet werden. Diese Koordinaten überträgt die Ortungsvorrichtung 2 zu dem Prozessor 1. Der Prozessor 1 fragt dieses Datum von der Ortungsvorrichtung 2 ab. Alternativ kann ein Standort des tragbaren Navigationsgeräts mittels der Kommunikationsmittel 6 abgeschätzt werden. Werden als Kommunikationsmittel 6 mobile Sende-/Empfangsstationen eingesetzt, dann ist zumindest die jeweilige Funkzelle als Standortbereich anzugeben.

Aus Funksignalen kann vorteilhafterweise auch die Geschwindigkeit des tragbaren Navigationsgeräts abgeschätzt werden, wodurch dann auch eine Bewegungsrichtung angegeben wird. Dies ist einerseits durch Ausnutzung des Dopplereffekts und andererseits aus der zeitlichen Änderung des Übertragungsverhaltens eines Funkkanals möglich. Die Geschwindigkeit und Bewegungsrichtung ist auch in einfacher Weise aus vergangenen Standorten abschätzbar.

Die Anzeige 3 weist eine angeschlossene Elektronik auf, die die von dem Prozessor 1 kommenden Daten für die Anzeige 3 vorbereitet. In einer Weiterbildung weist die Anzeige 3 eine berührungssensitive Schicht auf, mittels derer ein Benutzer Eingaben vornehmen kann. Auf der Anzeige 3 werden dann Bedienelemente angezeigt, auf die der Benutzer nach Wahl drückt, um die damit verbundene Funktion zu aktivieren. Diese Funktion einer Anzeige wird englisch mit Touch Screen bezeichnet. Weist die Anzeige 3 diese Funktion auf, dann übermittelt die Anzeige 3 mit ihrer angeschlossenen Elektronik, die das Berühren der berührungssensitiven Schicht in elektrische Signale umwandelt, dem Prozessor 1 entsprechende Signale.

Mittels der Eingabevorrichtung 4, die hier alternativ zum Touch Screen als Tastatur ausgeführt ist, gibt der Benutzer Eingaben bezüglich seines Ziels, der Route und der Darstellung ein. Der Benutzer ist dabei in der Lage, Routen zu seinem gewählten Ziel sich als Simulation darstellen zu lassen. Ein Zeitfaktor, der bestimmt, wie schnell die Simulation abläuft, ist durch den Benutzer einstellbar. Der Prozessor 1 berechnet aus den im Speicher 9 und/oder in den Speichermedien, die sich in der Aufnahme 7 befinden, die Darstellung für die Simulation. Mittels der Kommunikationsmittel 6 ist es dem Prozessor 1 auch möglich, von einem zentralen Rechner solch eine rechenintensive Simulation abzurufen oder zumindest zusätzliche Daten, um die Simulation zu berechnen.

Durch weitere Eingaben mittels der Eingabevorrichtung 4 bestimmt der Benutzer den Maßstab der Darstellung, wodurch eine Skalierung der Daten, die als Objekte vorliegen, notwendig wird. Die Objekte liegen in einem solchen Datenformat vor, der die freie Skalierung der Objekte ermöglicht. Die Objekte sind Elemente, aus denen eine Szene zusammengesetzt wird. Ein Objekt ist beispielsweise ein Haus, eine Mauer oder ein Baum. Vorteilhafterweise sind die Daten im MPEG4-Format vorhanden. Die Darstellung selbst ist durch den Benutzer insoweit weiterhin beeinflußbar, als der Benutzer zwischen einer Pfeildarstellung, einer zweidimensionalen Darstellung und einer perspektivischen Darstellung wählen kann. In Abhängigkeit von der Geschwindigkeit kann diese Darstellung auch automatisch verändert werden. Bei zunehmender Geschwindigkeit ist eine vereinfachte Darstellung weniger rechenintensiv und fokussiert den Benutzer auf die notwendigsten Informationen. Eine Vereinfachung der Darstellung ist auch durch eine Reduktion der dargestellten Objekte möglich.

Das Zusammenstellen der Szene aus Objekten ermöglicht auch die Integration von künstlichen Objekten, die in der Realität nicht vorhanden sind. Damit wird der Einbau von Werbung in die darzustellenden Szenen des Navigationsgeräts möglich.

Zusätzlich kann das tragbare Navigationsgerät auch eine sprachgesteuerte Eingabevorrichtung 4 aufweisen. Ein Mikrofon ist dann die Eingabevorrichtung 4 und ein nachgeschalteter Sprachprozessor, dessen Aufgaben auch der Prozessor 1 mitübernehmen möchte, verarbeitet die vom Benutzer geäußerten Befehle. Entsprechend der erkannten Befehle führt der Prozessor 1 entsprechende Befehle durch.

Es ist dem Benutzer auch möglich, zu dargestellten Objekten Zusatzfunktionen abzurufen. Diese Zusatzfunktionen umfassen Zusatzinformationen zu Objekten, wie zum Beispiel Gebäuden, Städten und Sehenswürdigkeiten, wobei diese Zusatzinformationen in multimedialer Form dargestellt werden, also als Videodatenstrom oder als Audiodatenstrom oder als Grafik. Eine weitere Zusatzfunktion ist die Aktivierung der Kommunikationsmittel 6, wobei dies über den Prozessor 1 erreicht wird.

Die Kommunikationsmittel 6 werden hier als Zusatzfunktionen verwendet, um entweder weitere Zusatzinformationen von externen Datenquellen abzurufen oder um Nachrichten zu versenden. Dazu gehört beispielsweise die Buchung eines Hotels oder der Kauf eines Gegenstandes. Durch diese Zusatzfunktionen wird damit eine Interaktivität mit dem Navigationsgerät erreicht, wobei der Benutzer nur die Zusatzfunktionen abruft, die er auch wirklich wünscht, wodurch ein zusätzlicher Informationsfilter entsteht.

Die Eingabevorrichtung 4 kann alternativ auch so ausgeführt sein, daß analog zu einer graphischen Schnittstelle eines Computersystems mittels der Eingabevorrichtung 4 ein Zeiger oder vergleichbares Element, zum Beispiel ein symbolhaftes Kästchen, auf der Anzeige 3 geführt wird und, wenn das Element auf bestimmten Objekten plaziert ist, aktiviert werden kann. Anstatt ein Element über die Anzeige 3 zu führen, ist es auch möglich, die dargestellte Szene zu rollen, d.h. man bewegt die dargestellte Szene, so daß nun auch bisher nicht dargestellte Objekte sichtbar werden. Darüber hinaus sind auch Menüpunkte auf der Anzeige darstellbar, um diese Menüpunkte zu aktivieren. Dafür eignen sich Ausführungen der Eingabevorrichtung 4 wie ein Trackball, ein Joystick oder Trackpoint, wobei diese Ausführungen jeweils Bedienelemente aufweisen, um wie oben gesagt Aktionen auszuführen. Die Eingabevorrichtung 4 kann beliebig an dem Gehäuse des Navigationsgeräts plaziert werden.

Der Lautsprecher 5 weist eine angeschlossene Elektronik auf, um die vom Prozessor 1 kommenden Signale für den Lautsprecher in geeignete Signale umzuwandeln. Der Lautsprecher 5 meldet dem Prozessor 1 mittels der angeschlossenen Elektronik, falls ein Funktionsausfall des Lautsprechers 5 vorliegt. Der Lautsprecher 5 hat die Aufgabe, akustische Hinweise für den Benutzer bereitzustellen. Auch die mittels der Zusatzfunktionen abgerufenen Audiodatenströme werden mittels des Lautsprechers 5 hörbar gemacht. Das tragbare Navigationsgerät kann auch die Funktion eines Radios oder Abspielgeräts für CDs oder DVDs haben, die sich in der Aufnahme 7 befinden. Dann wird der Lautsprecher 5 dazu verwendet die Daten auf den Datenträger hörbar zu machen. Die Dekodierung der Audiodaten übernimmt der Prozessor 1.

Die Kommunikationsmittel 6 sind zur Kommunikation mit externen Datenquellen vorgesehen. Als Kommunikationsmittel 6 eignen sich Sende-/Empfangsstationen wie es z.B. GSM (Global System for Mobile Communications) oder UMTS (Universal Mobile Telecommunication System) Mobiltelefone sind. Aber auch eine Kombination von Sende-/Empfangsstationen mit Empfangsstationen, wie sie Rundfunkempfänger bieten sind geeignet, denn insbesondere mittels digitalem Hörfunk ist der Empfang von breitbandigen Signalen möglich. Zu den digitalen Rundfunkverfahren gehört DAB (Digital Audio Broadcasting).

DAB ist ein digitales Rundfunkübertragungsverfahren, das eine Rahmenstruktur aufweist, die es erlaubt, Daten in verschiedenen Größen zu übertragen, wobei diese Daten Audio-, Video- oder Textdaten aufweisen. Die Rahmen werden von dem DAB-Empfänger ausgewertet, und es werden dann die Daten, die die Rahmen aufweisen, zusammengesetzt und zum Beispiel zum Abspielen einer kurzen Videosequenz mittels des Navigationsgeräts benutzt, die die Zimmer eines Hotels darstellt.

DAB ist insbesondere für einen mobilen Empfang von Rundfunksignalen konzipiert worden, so daß DAB für den Empfang von Multimediadaten durch einen bewegten Empfänger geeignet ist, wobei ein DAB-Empfänger im allgemeinen vorwiegend für den Rundfunkempfang angeschafft wird. Gegenüber von Mobilfunksystemen zeichnet sich DAB durch seine höheren Übertragungsraten aus, die insbesondere für Multimediaanwendungen von Interesse sind.

Ein Datendienstanbieter für Navigationsgeräte wird seine Daten mittels DAB übertragen, wobei solch ein Datendienstanbieter auch ein Hotel sein kann, das seine Leistungen anbietet. Eine Zugangsberechtigung für diese Daten ist im erfindungsgemäßen Navigationsgerät als Schlüssel zur Entschlüsselung der empfangenen Daten integriert, wobei es jedoch auch vorgesehen sein kann, daß die Daten unverschlüsselt bleiben, da die Daten nur von einem geeignet ausgerüsteten Navigationsgerät empfangen werden können.

Neben DAB bieten andere bekannte digitale Rundfunkübertragungsverfahren wie DVB (Digital Video Broadcasting) und DRM (Digital Radio Mondial) die Möglichkeit, Multimediadaten zu übertragen. DVB und DRM unterscheiden sich von DAB zum Beispiel in der Rahmenstruktur, dem Sendefrequenzbereich und der Übertragungsbandbreite.

Weiterhin können die Kommunikationsmittel 6 auch zu einer direkten Kommunikation mit einem anderen Gesprächspartner verwendet werden, so daß das Navigationsgerät auch die Funktionen eines Telefons aufweist. Das erfindungsgemäße Navigationsgerät wird damit zu einem multifunktionalen Kommunikationsgerät und zu einem elektronischen Begleiter.

Die Aufnahme 7 für Datenträger, die auch eine Signalverarbeitung aufweist, ist hier für Chipkarten ausgelegt. Die Chipkarten werden als Speichermedien verwendet, um für ein bestimmtes Gebiet Objekte zu laden und damit Szenen für dieses Gebiet darstellen zu können. So ist es einem Benutzer ermöglicht, je nach Speicherkapazität des Datenträgers für größere oder kleinere Gebiete Datenträger zu laden und damit relevante Daten zur Darstellung zu bevorraten. Alternativ kann diese Aufnahme 7 auch für Minidiscs, CDs, DVDs (Digital Versatile Disk) oder andere Wechselfestplatten ausgelegt sein. Die Signalverarbeitung sorgt für das Lesen der Daten und die Kommunikation mit dem Prozessor 1. Der Prozessor 1 ruft je nach Bedarf Daten von der Aufnahme 7 ab.

Der Recorder 8 ist zur Video- und Audioaufnahme gedacht. Damit wird die Funktionalität des Navigationsgeräts entscheidend erweitert, so daß der Benutzer je nach Situation Daten aufnimmt und gegebenenfalls mittels der Kommunikationsmittel 6 weiterversendet.

Der Speicher 9 ist zur Zwischenspeicherung von aktuellen Daten gedacht, da er im allgemeinen schneller in bezug auf das Laden der Daten sein wird als die Datenträger in der Aufnahme 7 oder Daten die mittels der Kommunikationsmittel 6 empfangen werden. Da insbesondere eine grafische Darstellung sehr rechenintensiv und zeitintensiv ist, ist die Verwendung eines schnellen lokalen Speichers hier angebracht. Auch um aktuelle Daten zwischenzuspeichern ist dieser Speicher 9 geeignet. Der Prozessor 1 greift einerseits auf Daten im Speicher 9 zurück und speichert eben auch Daten auf dem Speicher 9.

In dem Speicher 9 sind die notwendigen Dekoderprogramme für die Dekodierung von MPEG4 und anderen verwendeten Codierungen vorhanden, so daß der Prozessor 1 diese Programme bei Bedarf lädt.

In Figur 2 ist das erfindungsgemäße Navigationsgerät dargestellt, wobei alle Komponenten nun über einen Bus 10 verbunden sind. Der Prozessor 11, die Ortungsvorrichtung 12, die Anzeige 13, die Eingabevorrichtung 14, der Lautsprecher 15, die Kommunikationsmittel 16, die Aufnahme 17, der Recorder 18 und der Speicher 19 sind alle über Datenein- und -ausgänge mit dem Bus 10 verbunden, wobei jedes Gerät einen Controller aufweist, der die Kommunikation über den Bus steuert. Die Funktionalität der einzelnen Komponenten ist die gleiche wie die für Figur 1 beschriebene.

In einer Weiterbildung der Erfindung ist vorgesehen, daß das Navigationsgerät selbst nur einen kleinen Prozessor aufweist und die meisten Daten von externen Datenquellen mittels der Kommunikationsmittel lädt, um so die überlegene Rechenkapazität von zentralen Rechnern zu nutzen.

Die dargestellten tragbaren Navigationsgeräte können mehr oder weniger Komponenten als hier dargestellt umfassen.

Da das Navigationsgerät tragbar ist, weist es einen Griff oder Gurt zum Tragen auf. Alternativ ist es möglich, es in eine Tasche zu geben, mittels derer das Navigationsgerät dann transportiert wird. Solch eine Tasche wird vorteilhafterweise Öffnungen oder Sichtfenster zu der Anzeige 3 und der Eingabevorrichtung 4 aufweisen.

Da tragbare Navigationsgeräte hinfallen können, sind die Komponenten des Navigationsgeräts dahingehend ausgelegt, leichte Stürze unbeschadet zu überstehen. An die Komponenten sind daher ähnliche Anforderungen zu stellen, wie an die Komponenten eines tragbaren Computers.

## Patentansprüche

1. Navigationsgerät, wobei das Navigationsgerät einen Prozessor (1, 11) aufweist, wobei der Prozessor (1, 11) einen Standort des Navigationsgeräts mittels einer Ortungsvorrichtung (2, 12) feststellt, wobei das Navigationsgerät eine Anzeige (3, 13) und einen Lautsprecher (5, 15) aufweist, wobei die Anzeige (3, 13) ein Gebiet, in dem sich das Navigationsgerät befindet, darstellt, wobei eine Eingabevorrichtung (4, 14) Benutzereingaben bezüglich eines Ziels verarbeitet und dem Prozessor (1, 11) übergibt, wobei der Prozessor (1, 11) eine Route zu dem Ziel in Abhängigkeit des Standorts des Navigationsgeräts anpasst, wobei die Anzeige (3, 13) eine darzustellende Szene perspektivisch darstellt, wobei die Anzeige (3, 13) die darzustellende Szene aus Objekten zusammenfügt, und dass der Prozessor (1, 11) die Objekte der dargestellten Szene mit von dem Benutzer zu aktivierenden Zusatzfunktionen verknüpft, **dadurch gekennzeichnet, dass** das Navigationsgerät tragbar ist, dass der Prozessor (1, 11) als die Zusatzfunktionen Zusatzinformationen und Kommunikationsmittel (6, 16) bereitstellt und, dass das Gerät so gestalltet ist, dass im Gebrauch die Kommunikationsmittel (6, 16) eine Verbindung zu externen Datenquellen herstellen, um die Darstellung des Gebiets und die Zusatzinformation zu aktualisieren.

2. Navigationsgerät nach Anspruch 1, **dadurch gekennzeichnet, dass** der Prozessor (1, 11) die dargestellten Objekte nach Benutzereingaben skaliert.

3. Navigationsgerät nach Anspruch 2, **dadurch gekennzeichnet, dass** das Navigationsgerät Mittel aufweist, um zwischen einer Pfeil-, zweidimensionalen und perspektivischen Darstellung umzuschalten.

4. Navigationsgerät nach Anspruch 3, **dadurch gekennzeichnet, dass** das Navigationsgerät so ausgebildet ist, dass mittels Benutzereingaben eine Route zu einem vom Benutzer eingegebenen Ziel simuliert wird.

5. Navigationsgerät nach Anspruch 4, **dadurch gekennzeichnet, dass** die Anzeige (3, 13) die gleichzeitige Darstellung von mehreren Szenen ermöglicht.

6. Navigationsgerät nach Anspruch 5, **dadurch gekennzeichnet, dass** der Prozessor (1, 11) die Darstellungsabhängigkeit von der Geschwindigkeit des Navigationsgeräts verändert.

7. Navigationsgerät nach Anspruch 6, **dadurch gekennzeichnet, dass** die Anzeige (3, 13) MPEG4-codierte Objekte verwendet.

8. Navigationsgerät nach einem der vorhergehenden Ansprüche, **dadurch gekennzeichnet, dass** das Navigationsgerät die Anzeige (3, 13) mit einer berührungssensitiven Schicht aufweist, um das Navigationsgerät über die Anzeige (3, 13) zu bedienen.

9. Navigationsgerät nach einem der vorhergehenden Ansprüche, **dadurch gekennzeichnet, dass** das Navigationsgerät eine Aufnahme (7, 17) aufweist, um auswechselbare Speichermedien aufzunehmen.

10. Navigationsgerät nach einem der vorhergehenden Ansprüche, **dadurch gekennzeichnet, dass** das Navigationsgerät Mittel (8, 18) zur optischen und/oder akustischen Aufzeichnung aufweist.

11. Navigationsgerät nach einem der vorhergehenden Ansprüche, **dadurch gekennzeichnet, dass** der Prozessor (1, 11) aus dem aktuellen Standort einer vorgegebenen Zahl von vergangenen Standorten und der Geschwindigkeit einer Bewegungsrichtung für das Navigationsgerät berechnet, um mittels der berechneten Bewegungsrichtung, die mittels der Anzeige (3 13) darzustellende Szene bestimmt.

## Claims

1. Navigation appliance, where the navigation appliance has a processor (1, 11), where the processor (1, 11) establishes a position for the navigation appliance using a position-finding apparatus (2, 12), where the navigation appliance has a display (3, 13) and a loudspeaker (5, 15), where the display (3, 13) presents an area containing the navigation appliance, where an input apparatus (4, 14) processes user inputs for a destination and transfers them to the processor (1, 11), where the processor (1, 11) matches a route to the destination on the basis of the position of the navigation appliance, where the display (3, 13) presents a scene which is to be presented in a perspective view, where the display (3, 13) compiles the scene which is to be presented from objects, and where the processor (1, 11) links the objects in the presented scene to supplementary functions which are to be activated by the user, **characterized in that** the navigation appliance is portable, **in that** the processor (1, 11) provides supplementary information and communication means (6, 16) as the supplementary functions, and **in that** the appliance is in a form such that in use the communication means (6, 16) set up a connection to external data sources in order to update the presentation of the area and the supplementary information.

2. Navigation appliance according to Claim 1, **characterized in that** the processor (1, 11) scales the presented objects according to user inputs.

3. Navigation appliance according to Claim 2, **characterized in that** the navigation appliance has means in order to change over between an arrow presentation, a two-dimensional presentation and a perspective presentation.

4. Navigation appliance according to Claim 3, **characterized in that** the navigation appliance is in the form such that user inputs are used to simulate a route to a destination input by the user.

5. Navigation appliance according to Claim 4, **characterized in that** the display (3, 13) allows a plurality of scenes to be presented simultaneously.

6. Navigation appliance according to Claim 5, **characterized in that** the processor (1, 11) alters the presentation dependency on the speed of the navigation appliance.

7. Navigation appliance according to Claim 6, **characterized in that** the display (3, 13) uses MPEG4-encoded objects.

8. Navigation appliance according to one of the preceding claims, **characterized in that** the navigation appliance has the display (3, 13) with a touch-sensitive layer in order to control the navigation appliance using the display (3, 13).

9. Navigation appliance according to one of the preceding claims, **characterized in that** the navigation appliance has a receptacle (7, 17) in order to hold interchangeable storage media.

10. Navigation appliance according to one of the preceding claims, **characterized in that** the navigation appliance has means (8, 18) for visual and/or audio recording.

11. Navigation appliance according to one of the preceding claims, **characterized in that** the processor (1, 11) takes the current position from a prescribed number of past positions and the speed and calculates a direction of movement for the navigation appliance in order to use the calculated direction of movement to determine the scene to be presented by means of the display (3, 13).

## Revendications

1. Appareil de navigation comportant un processeur (1, 11),
le processeur (1, 11) déterminant l'emplacement de l'appareil de navigation par un dispositif de localisation (2, 12),
l'appareil de navigation ayant un afficheur (3, 13) et haut-parleur (5, 15),
l'afficheur (3, 13) représentant la zone dans laquelle se trouve l'appareil de navigation,
un dispositif d'entrée (4, 14) traite les entrées par l'utilisateur concernant la destination et les transmet au processeur (1, 11),
le processeur (1, 11) adapte le trajet à la destination en fonction de l'emplacement de l'appareil de navigation,
l'afficheur (3, 13) représente une scène en perspective,
l'afficheur (3, 13) assemble la scène à représenter à partir d'objets et
le processeur (1, 11) combine les objets de la scène à représenter avec les fonctions complémentaires activées l'utilisateur,
**caractérisé en ce que**
l'appareil de navigation est portable,
le processeur (1, 11) fournit les fonctions supplémentaires, les informations supplémentaires et les moyens de communication (6, 16) et
les moyens de communication (6, 16) réalisent une liaison avec une source de données externes pour actualiser la représentation de la zone et l'information complémentaire.

2. Appareil de navigation selon la revendication 1,
**caractérisé en ce que**
le processeur (1, 11) met à l'échelle les objets représentés selon les entrées de l'utilisateur.

3. Appareil de navigation selon la revendication 2,
**caractérisé en ce que**
l'appareil de navigation comporte des moyens pour commuter entre une représentation fléchée, une représentation bidimensionnelle et une représentation en perspective.

4. Appareil de navigation selon la revendication 3,
**caractérisé en ce que**
l'appareil de navigation est réalisé pour permettre avec les entrées de l'utilisateur de simuler un trajet vers la destination introduite par l'utilisateur.

5. Appareil de navigation selon la revendication 4,
**caractérisé en ce que**
l'affichage (3, 13) permet la représentation simultanée de plusieurs scènes.

6. Appareil de navigation selon la revendication 5,
**caractérisé en ce que**
le processeur (1, 11) modifie la relation de la représentation à la vitesse de l'appareil de navigation.

7. Appareil de navigation selon la revendication 6,
**caractérisé en ce que**
l'afficheur (3, 13) utilise des objets en code MPEG4.

8. Appareil de navigation selon l'une des revendications précédentes,
**caractérisé en ce que**
l'afficheur (3, 13) comporte une couche tactile pour commander l'appareil de navigation par l'afficheur (3, 13).

9. Appareil de navigation selon l'une des revendications précédentes,
**caractérisé en ce que**
l'appareil de navigation comporte un moyen de réception (7, 17) pour recevoir des supports de mémoire interchangeables.

10. Appareil de navigation selon l'une des revendications précédentes,
**caractérisé en ce que**
l'appareil de navigation comporte des moyens (8, 18) pour l'enregistrement optique et/ ou acoustique.

11. Appareil de navigation selon l'une des revendications précédentes,
**caractérisé en ce que**
le processeur (1, 11) calcule à partir de l'emplacement actuel, un nombre prédéfini d'emplacements passés et la vitesse d'une direction de mouvement pour l'appareil de navigation pour définir la scène à représenter par l'afficheur (3, 13) à l'aide de la direction de mouvement calculée.
